Europäisches Patentamt

European Patent Office

Office européen des brevets

(19)

(11) **EP 1 298 508 B1**

(12) **FASCICULE DE BREVET EUROPEEN**

(45) Date de publication et mention
de la délivrance du brevet:
**16.06.2004 Bulletin 2004/25**

(51) Int Cl.⁷: **G05B 19/35**, G05B 19/406,
B60N 2/02

(21) Numéro de dépôt: **02292322.1**

(22) Date de dépôt: **20.09.2002**

(54) **Actionneur, famille d'actionneurs pour siège et procédé de fabrication d'un tel actionneur**

Antrieb, Familie der Antriebe für Sessel und Verfahren zu ihrer Herstellung

Actuator, Actuator-family for seats and process of making such an actuator

(84) Etats contractants désignés:
**DE FR GB IT**

(30) Priorité: **26.09.2001 FR 0112392**

(43) Date de publication de la demande:
**02.04.2003 Bulletin 2003/14**

(73) Titulaire: **Messier-Bugatti**
**78140 Velizy Villacoublay (FR)**

(72) Inventeur: **Nivet, Laurent**
**92600 Asnières (FR)**

(74) Mandataire: **Blot, Philippe Robert Emile et al**
**c/o Cabinet Lavoix,**
**2, place d'Estienne d'Orves**
**75441 Paris Cedex 09 (FR)**

(56) Documents cités:
**FR-A- 2 512 567**       **US-A- 4 706 194**
**US-A- 5 253 138**       **US-B1- 6 194 853**

## Description

La présente invention concerne un actionneur, du type comprenant, d'une part, un corps et un organe de commande mobile par rapport au corps, sous la commande d'un moteur d'actionnement et, d'autre part, un transducteur disposé entre le corps et l'organe de commande, ledit transducteur étant adapté pour fournir une valeur brute de mesure représentative de la position courante de l'organe de commande par rapport au corps.

Afin d'améliorer le confort de l'utilisateur, de nombreux sièges sont de nos jours, munis de dispositifs électriques d'actionnement permettant de modifier la configuration du siège par déplacement d'éléments mobiles de celui-ci. En particulier, de tels sièges sont notamment utilisés dans les véhicules de transport tels que les avions, les bateaux et les voitures de chemins de fer.

Il est courant que chaque siège comporte un dossier inclinable articulé à une extrémité d'une assise, ainsi qu'un repose-jambes, articulé à l'autre extrémité de l'assise. Le dossier et le repose-jambes sont tous deux déplaçables sous la commande d'un dispositif d'actionnement entre une position sensiblement verticale et une position sensiblement horizontale, permettant ainsi au siège de prendre plusieurs configurations. Par exemple, parmi ces configurations sont prévues une configuration de couchage de l'utilisateur dans laquelle le dossier et le repose-jambes sont tous deux sensiblement horizontaux et une configuration d'assise dans laquelle le repose-jambes et le dossier sont tous deux sensiblement verticaux.

Un dispositif d'actionnement est prévu pour la commande directe et indépendante de chaque élément mobile du siège.

De plus, de nombreux sièges sont équipés de dispositifs permettant par une commande unique de provoquer le déplacement à la fois du repose-jambes et du repose-pieds et ce, afin d'amener le siège, par une commande unique, dans une configuration prédéterminée.

Pour chacune de ces configurations prédéterminées du siège, une position cible prédéterminée est fixée pour chaque élément de siège et donc chaque actionneur.

Afin de connaître à chaque instant la position des différents éléments de siège, et ainsi pouvoir gérer aisément leur déplacement, il est connu de prévoir dans les dispositifs d'actionnement des éléments de siège, un transducteur tel qu'un potentiomètre permettant de recueillir des valeurs brutes de mesure représentatives de la position courante de chaque actionneur.

Pour chacune des configurations prédéterminées du siège accessibles par un dispositif d'actionnement unique, une valeur cible prédéterminée est mémorisée, cette valeur cible prédéterminée étant égale à la valeur brute de mesure relevée lorsque l'élément de siège est dans la position cible souhaitée.

Ainsi, pour amener un élément du siège vers une position prédéterminée, l'actionneur est mis en action jusqu'à ce que la valeur brute de mesure courante fournie par le transducteur soit égale à la valeur cible prédéterminée correspondant à la position escomptée pour l'actionneur et donc l'élément de siège correspondant.

Par ailleurs, afin d'éviter qu'un élément mobile du siège ne vienne heurter un obstacle, il est connu de suivre la position de cet élément mobile et d'interdire que la valeur brute de mesure fournie par le transducteur ne dépasse une valeur de seuil prédéterminée. Si la valeur brute de mesure fournie par le transducteur est égale à cette valeur de seuil prédéterminée, l'arrêt de l'actionneur est commandé automatiquement, indépendamment de la commande appliquée par le passager.

Dans la pratique, on constate que, du fait des tolérances de fabrication des actionneurs, et des imprécisions mécaniques et électroniques des transducteurs, des actionneurs identiques ne fournissent pas tous la même valeur brute de mesure pour une même position de l'actionneur.

Ainsi, en cas de remplacement d'un actionneur en panne par un nouvel actionneur, une nouvelle programmation du siège est nécessaire, sans quoi la réponse du siège à une commande de l'utilisateur peut être insatisfaisante du fait des tolérances et imprécisions de l'actionneur.

L'invention a pour but de proposer un actionneur pour un élément de siège, permettant d'assurer un remplacement aisé de l'actionneur par un autre sans que des dysfonctionnements du siège ne surviennent.

A cet effet, l'invention a pour objet un actionneur pour élément de siège du type précité, caractérisé en ce qu'il comporte des moyens de correction de ladite valeur brute de mesure, lesdits moyens de correction étant adaptés pour définir un algorithme de correction propre audit actionneur et adapté pour fournir une valeur corrigée de la position courante de l'actionneur à partir de ladite valeur brute de mesure, et en ce que lesdits moyens de correction sont propres audit actionneur et sont intégrés à celui-ci.

Suivant des modes particuliers de réalisation, l'actionneur comporte l'une ou plusieurs des caractéristiques suivantes :

- lesdits moyens de correction comportent une unité de correction propre audit actionneur et intégrée dans ledit actionneur, laquelle unité de correction comporte des moyens de stockage dudit algorithme de correction lors de la fabrication de l'actionneur et une unité de traitement d'informations adaptée pour fournir ladite valeur corrigée par mise en oeuvre de l'algorithme de correction mémorisé à partir de ladite valeur brute de mesure ;
- lesdits moyens de correction comportent des moyens de stockage de paramètres de définition dudit algorithme de correction et des moyens de transmission desdits paramètres de définition vers une unité de commande de l'actionneur propre à mettre en oeuvre l'algorithme de correction sur la base desdits paramètres de définition ;

- l'actionneur est isolé d'un siège, avant montage sur le siège ;
- ledit algorithme de correction dépend seulement des caractéristiques structurelles propres audit actionneur et est indépendant de la structure du siège auquel il est destiné ; et
- ledit algorithme de correction est adapté pour calculer la valeur corrigée comme l'image de la valeur brute de mesure par une fonction affine de correction.

L'invention a en outre pour objet un système d'actionnement caractérisé en ce qu'il comporte au moins un actionneur tel que défini ci-dessus et une unité de commande du ou de chaque actionneur, laquelle unité de commande est reliée au ou chaque actionneur pour recevoir du ou de chaque actionneur la valeur brute de mesure et lesdits paramètres de définition de l'algorithme, et en ce que l'unité de commande comporte une unité de traitement d'informations adaptée pour fournir à partir de ladite valeur brute de mesure reçue, ladite valeur corrigée, par mise en oeuvre de l'algorithme de correction sur la base desdits paramètres de définition de l'algorithme reçus.

L'invention a également pour objet une famille d'actionneurs comportant plusieurs actionneurs tels que définis ci-dessus et en ce que l'algorithme de correction de chaque actionneur est tel que, pour au moins une position relative prédéterminée de l'organe de commande par rapport au corps, lesdites valeurs corrigées fournies par tous les actionneurs de la famille sont égales à une même valeur prédéterminée.

Suivant des variantes :

- l'algorithme de correction de chaque actionneur est tel que, pour au moins deux positions relatives prédéterminées de l'organe de commande par rapport au corps, lesdites valeurs corrigées fournies par tous les actionneurs de la famille sont égales à une même valeur prédéterminée ;
- l'algorithme de correction propre à chaque actionneur est tel que l'écart entre les valeurs corrigées fournies par les actionneurs de la famille, pour tout ensemble de positions identiques des actionneurs est inférieur à l'écart entre les valeurs brutes de mesure fournies par les transducteurs des mêmes actionneurs pour le même ensemble de positions identiques des actionneurs.

Enfin, l'invention est relative à un procédé de fabrication d'un actionneur destiné à être monté dans un siège, l'actionneur comprenant, d'une part, un corps et un organe de commande mobile par rapport au corps, sous la commande d'un moteur d'actionnement et, d'autre part, un transducteur disposé entre le corps et l'organe de commande, ledit transducteur étant adapté pour fournir une valeur brute de mesure représentative de la position courante de l'organe de commande par rapport au corps, caractérisé en ce que l'on intègre à l'actionneur des moyens de correction de ladite valeur brute de mesure, lesdits moyens de correction étant adaptés définir un algorithme de correction propre audit actionneur et adapté pour fournir une valeur corrigée de la position courante de l'actionneur à partir de ladite valeur brute de mesure, et en ce qu'il comporte une phase de personnalisation, en fonction de l'actionneur, de l'algorithme de correction défini par lesdits moyens de correction, avant montage de l'actionneur sur le siège.

En particulier, ladite phase de personnalisation de l'algorithme de correction comprend les étapes de :

- positionnement de l'organe de commande par rapport au corps dans au moins une position prédéterminée ;
- lecture de la valeur brute de mesure, fournie par le transducteur pour la ou chaque position prédéterminée ; et
- détermination de l'algorithme de correction à partir de la ou chaque valeur brute de mesure lue.

L'invention sera mieux comprise à la lecture de la description qui va suivre, donnée uniquement à titre d'exemple et faite en se référant aux dessins sur lesquels :

- la figure 1 est une vue schématique de côté d'un siège équipé de deux actionneurs selon l'invention ;
- la figure 2 est une vue schématique d'un actionneur selon l'invention, en cours de calibrage ;
- la figure 3 est un organigramme illustrant le processus de calibrage d'un actionneur selon l'invention ;
- la figure 4 est une courbe illustrant les calculs effectués lors du procédé de calibrage et lors du calcul de valeurs corrigées de position ;
- la figure 5 est un organigramme explicitant le fonctionnement d'un siège comportant un actionneur selon l'invention ;
- la figure 6 est une vue analogue à celle de la figure 2 d'une variante de réalisation d'un actionneur selon l'invention en cours de calibrage et
- la figure 7 est une vue schématique d'un système d'actionnement d'un siège selon l'invention incorporant l'actionneur de la figure 6 et une unité de commande.

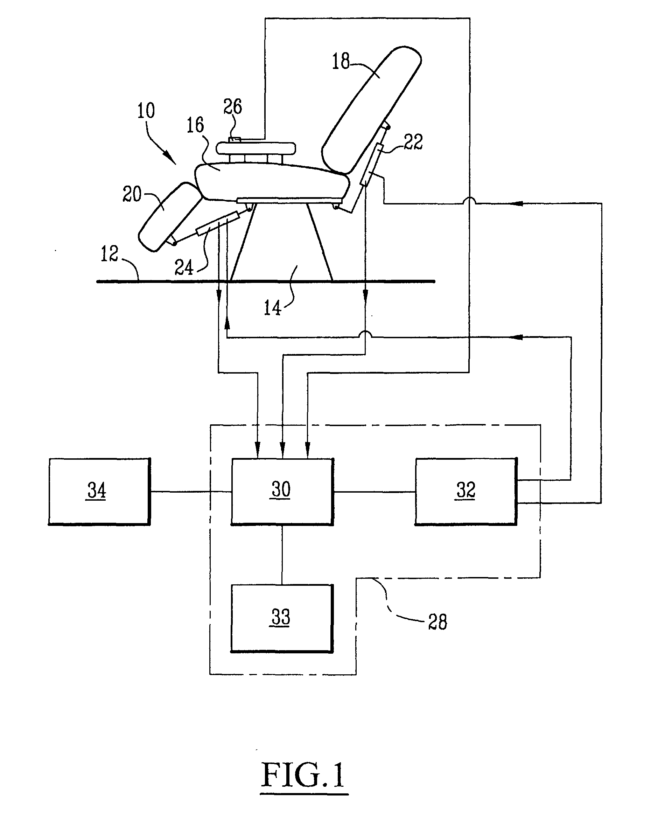

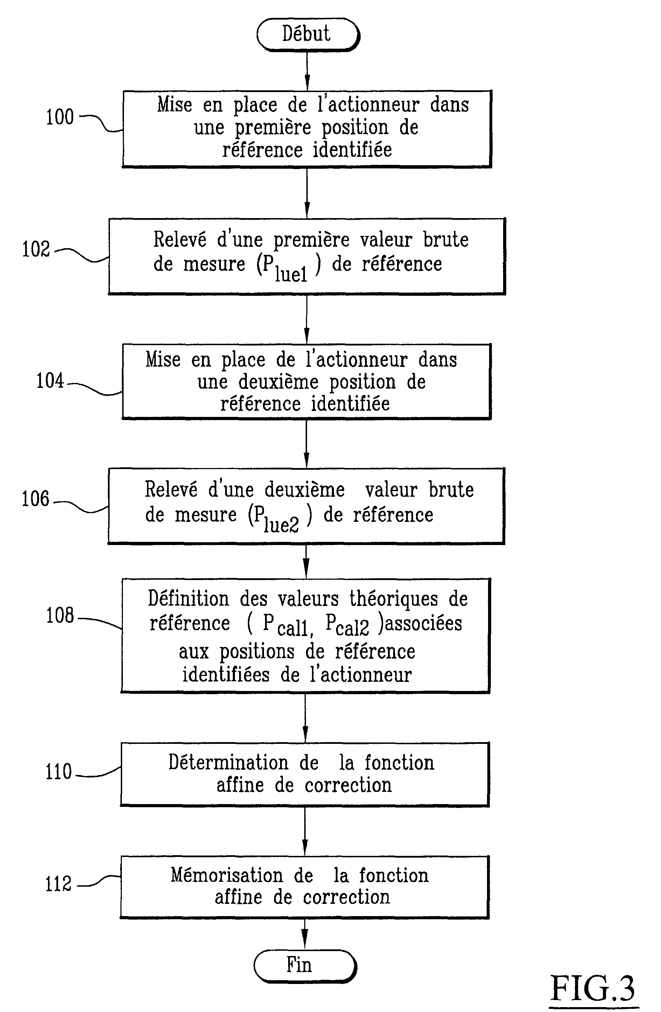

Le siège 10 représenté sur la figure 1 est un siège de passager d'un avion. Ce siège est fixé sur le sol 12 de l'avion.

Le siège 10 comporte un piétement 14 solidaire du sol 12 sur lequel repose une assise 16 sensiblement horizontale. A une extrémité de l'assise est articulé un dossier 18 déplaçable entre une position sensiblement verticale et une position sensiblement horizontale dans laquelle il prolonge l'assise 16.

A l'autre extrémité de l'assise 16, est articulé un repose-jambes 20 déplaçable entre une position rabattue sensiblement verticale au-dessous de l'assise 16 et une position étendue sensiblement horizontale dans le prolongement de l'assise 16.

Un premier actionneur 22 est monté entre l'assise 16 et le dossier 18 afin d'assurer un déplacement de ce dernier entre sa position verticale et sa position horizontale.

De même, un second actionneur 24 est monté entre l'assise 16 et le repose-jambes 20 afin d'assurer un déplacement de ce dernier entre sa position rabattue et sa position étendue.

Un clavier 26 ou tout autre organe de commande est solidarisé au siège pour permettre à l'utilisateur de commander séparément et directement chaque actionneur du siège. Le clavier permet également d'atteindre, par une commande unique agissant sur plusieurs actionneurs, plusieurs configurations prédéterminées du siège. Ces configurations sont par exemple une configuration de repas, une configuration d'atterrissage et une configuration de couchage.

Chaque actionneur 22, 24 est alimenté en courant électrique depuis une unité de commande commune 28. Cette unité 28 est reliée séparément à chacun des actionneurs 22, 24 afin d'assurer leur pilotage indépendant.

De plus, chaque actionneur est relié à l'unité de commande 28 pour transmettre à celle-ci une valeur corrigée de la position courante de l'actionneur en cause.

Le clavier 26 est également relié à l'unité de commande 28 pour assurer le pilotage des actionneurs en fonction des ordres saisis.

Afin d'assurer la commande du siège, l'unité de commande 28 comporte des moyens de pilotage 30 auxquels sont reliés le clavier 26 et les deux actionneurs 22 et 24. Ces derniers fournissent chacun en continu aux moyens de pilotage 30, une valeur corrigée représentative de leur position courante.

L'unité de commande 28 comporte en outre une unité 32 d'alimentation des actionneurs 22 et 24 reliée aux moyens de pilotage 30. L'unité 32 est adaptée pour alimenter en courant électrique les actionneurs 22 et 24 en fonction d'ordres de commande reçus des moyens de pilotage 30. En particulier, le courant électrique fourni par l'unité d'alimentation 32 est adapté pour assurer une vitesse satisfaisante des actionneurs ainsi qu'un courant ayant une forme permettant le déplacement de l'actionneur dans le sens souhaité.

L'unité de commande 28 comporte par ailleurs une mémoire 33 reliée aux moyens de pilotage 30. Dans la mémoire 33 sont stockées des valeurs de seuil prédéterminées, notées généralement $P_{pred}$, correspondant aux positions cibles devant être prises par les éléments de siège lors du mouvement du siège vers une configuration prédéterminée.

Ainsi, pour chaque élément de siège, plusieurs valeurs de seuil prédéterminées sont mémorisées. Chaque valeur de seuil prédéterminée correspond à une position cible pour un élément de siège, cette position cible étant définie pour une configuration prédéterminée du siège.

En outre, deux autres valeurs de seuil prédéterminées, notées $P_{min}$ et $P_{max}$ sont mémorisées pour chaque actionneur dans la mémoire 33. Ces valeurs de seuil prédéterminées constituent des valeurs limites de débattement et correspondent aux positions extrêmes autorisées pour l'actionneur dans le siège et définissent donc la plage de débattement de celui-ci pour le siège considéré.

La mémoire 33 est réinscriptible sous la commande des moyens de pilotage 30 de l'unité centrale. En particulier, ces moyens 30 sont adaptés pour, lors de la réception d'un ordre de commande adapté issu par exemple d'un clavier annexe amovible 34, mémoriser, dans la mémoire 33, les valeurs de seuil prédéterminées pour chaque actionneur.

Les moyens de pilotage 30 sont adaptés pour assurer des comparaisons entre les valeurs corrigées de positions courantes reçues des actionneurs et les valeurs de seuil prédéterminées stockées dans la mémoire 33.

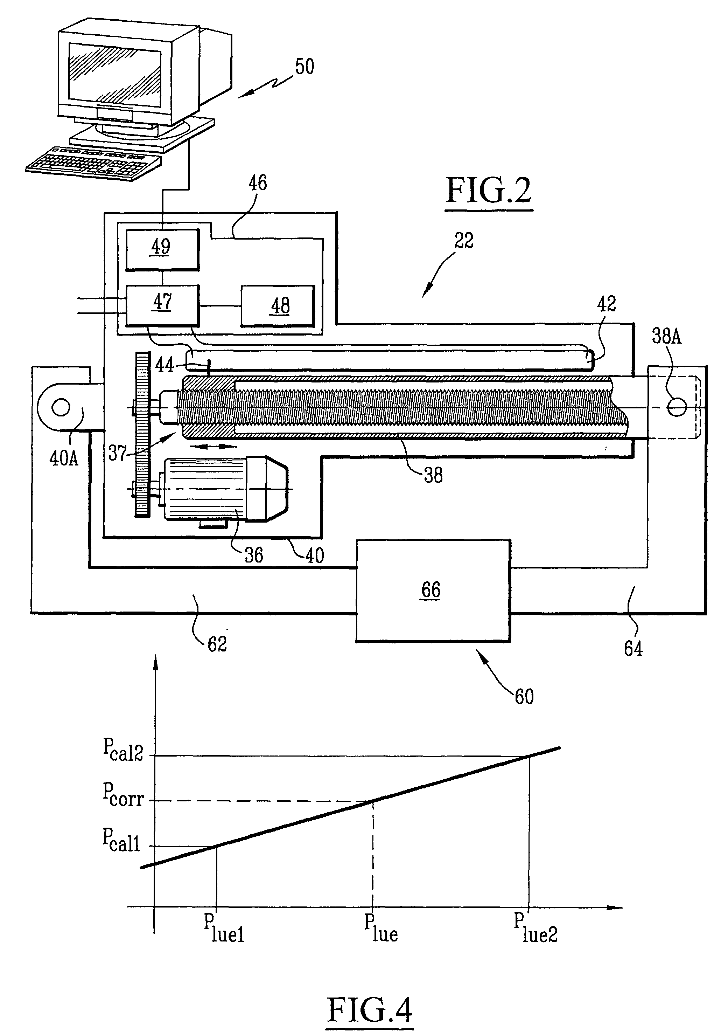

Les actionneurs 22 et 24 ont sensiblement la même structure. L'un d'eux est illustré schématiquement sur la figure 2.

Ainsi, un actionneur, par exemple 22, comporte un groupe moto-réducteur 36 associé, comme connu en soi, par exemple à l'aide d'un agencement vis-écrou 37 à une tige 38 mobile en translation par rapport à un carter 40 dans lequel est fixé le groupe moto-réducteur. La tige 38 présente une extrémité libre traversée d'un orifice 38A pour la liaison à un élément de siège. De même, le carter 40 comporte une patte 40A de liaison à un autre élément du siège.

Un potentiomètre 42 ou tout autre type de transducteur adapté est fixé au carter 40. Un curseur 44 du potentiomètre est solidarisé à une extrémité de la tige 38 de l'actionneur.

Selon l'invention, chaque actionneur comporte en outre une unité propre 46 de correction des valeurs brutes de mesure fournies par le potentiomètre 42. Ces valeurs brutes de mesure sont représentatives de la position courante de l'actionneur. La valeur brute de mesure est la valeur de la résistance du potentiomètre, dans le cas considéré.

L'unité de correction 46 est adaptée pour recevoir en entrée une valeur brute de mesure et pour fournir, en sortie, une valeur corrigée de la position de l'actionneur. Cette valeur corrigée est adressée à l'unité de commande 28 à laquelle est reliée l'unité de correction 46 de l'actionneur.

L'unité de correction 46 et intégrée à l'actionneur, c'est-à-dire qu'elle est solidaire du corps de celui-ci et est remplacée en même temps que l'actionneur si celui-ci doit être remplacé.

L'unité de correction 46 comporte une unité de traitement d'informations 47 constituée par exemple d'un micro-contrôleur. L'unité de correction 46 comporte en outre des moyens de mémorisation 48 reliés à l'unité de traitement d'informations 47. Ces moyens de mémorisation 48 sont adaptés pour la mémorisation d'un algorithme de correction mis en oeuvre par l'unité de traitement d'informations 47. Cet algorithme comporte notamment une fonction de correction propre à l'actionneur, de préférence une fonction affine permettant de déterminer, à partir de chaque valeur brute de mesure reçue, une valeur corrigée de position de l'actionneur.

Une interface de communication 49 est prévue dans l'unité de correction 46 afin d'assurer la liaison de cette unité à des moyens de calibration amovibles 50. L'interface 49 est reliée à l'unité de traitement d'informations 47.

Les moyens de calibration 50 sont constitués par exemple par un ordinateur.

Ces moyens de calibrage 50 sont mis en oeuvre seulement lors de la fabrication de l'actionneur. Ils mettent en oeuvre un algorithme de calibrage permettant de déterminer et de mémoriser notamment la fonction affine de correction propre à l'actionneur.

L'algorithme de calibrage va maintenant être décrit en regard de la figure 3. Le même algorithme est mis en oeuvre pour tous les actionneurs d'une même famille d'actionneurs, cette famille regroupant tous les actionneurs identiques d'un point de vue fonctionnel et dimensionnel aux tolérances près. En particulier, tous les actionneurs d'une même famille peuvent être interchangés.

De plus, pour une même position, tous les actionneurs d'une même famille fournissent des valeurs corrigées de mesure qui sont identiques ou sensiblement identiques, même si les valeurs brutes de mesure fournies par les transducteurs des actionneurs sont différentes.

La phase de calibrage de l'actionneur est mise en oeuvre en usine, avant livraison de l'actionneur au fabricant de siège. Cette phase de calibrage correspond à la phase ultime de la fabrication de l'actionneur.

Pour le calibrage, et comme illustré sur la figure 2, l'actionneur est mis en place dans un mannequin 60 comportant deux bras mobiles 62, 64 déplaçables en translation l'un par rapport à l'autre sous la commande d'un mécanisme d'actionnement 66. Le carter 40 de l'actionneur est lié au premier bras mobile 62 par l'intermédiaire de la patte 40A, alors que la tige 38 de l'actionneur est liée au second bras mobile 64 du mannequin depuis son extrémité 38A.

Le mannequin est adapté pour amener l'actionneur dans deux positions de référence prédéterminées et identifiées, chaque position étant définie par un écartement donné des extrémités des premier et second bras mobiles.

Ces positions de référence prédéterminées du mannequin 60 correspondent avantageusement aux positions extrêmes de fonctionnement de l'actionneur.

A l'étape 100, l'actionneur est amené dans la première position de référence identifiée. Cette position est définie et imposée par le mannequin 60. A l'étape 102, par enfoncement d'une touche prédéterminée des moyens de calibrage 50, une première valeur brute de mesure de référence notée, $P_{lue1}$, est relevée depuis le potentiomètre 42 de l'actionneur. Cette valeur est transmise aux moyens de calibrage 50 dans lesquels elle est temporairement mémorisée.

L'actionneur est ensuite amené à l'étape 104 jusqu'à la deuxième position de référence identifiée. Cette position est définie et imposée par le mannequin 60.

A l'étape 106, par l'enfoncement d'une touche prédéterminée des moyens de calibrage 50, une deuxième valeur brute de mesure de référence, notée $P_{lue2}$, représentative de la position de l'actionneur dans sa deuxième position de référence identifiée est enregistrée par les moyens de calibrage 50.

A l'étape 108, des valeurs théoriques de référence, notées $P_{cal1}$ et $P_{cal2}$, associées aux première et deuxième positions de référence identifiées de l'actionneur considérées aux étapes 100 et 104, sont définies par les moyens de calibrage 50. Ces valeurs théoriques de référence sont définies en fonction des positions réelles des premier et second bras 62, 64 du mannequin.

Ces valeurs théoriques $P_{cal1}$ et $P_{cal2}$ sont égales ou proportionnelles aux valeurs brutes que devrait fournir le potentiomètre d'un actionneur supposé idéal de la famille, lorsque l'actionneur est dans la première position de référence identifiée et dans la deuxième position de référence identifiée.

Ces valeurs théoriques $P_{cal1}$ et $P_{cal2}$ sont identiques pour tous les actionneurs de la famille.

A l'étape 110, une fonction affine de correction propre à l'actionneur considéré est établie par les moyens de calibrage 50 à partir des valeurs brutes de mesure de référence relevées $P_{lue1}$ et $P_{lue2}$ et des valeurs théoriques de référence $P_{cal1}$ et $P_{cal2}$.

Comme illustré sur la figure 4, la fonction affine calculée correspond à l'équation de la droite passant par les points d'abscisse $(P_{lue1}, P_{cal1})$ et $(P_{lue2}, P_{cal2})$ dans un repère où les valeurs brutes de mesure sont représentées en abscisse et les valeurs théoriques en ordonnée.

La fonction de correction correspondant à l'équation de la droite précitée est donnée par la formule

$$P_{corr} = P_{lue} - \{a(P_{lue} - P_{cal1}) + b\}$$

où :

$P_{corr}$ est la valeur corrigée correspondant à la valeur brute qui aurait dû être obtenue avec un actionneur idéal, et

$P_{lue}$ est la valeur brute de mesure courante effectivement relevée.

Dans la formule de correction précitée, b est donné par la formule :

$$b= P_{lue1} - P_{cal1},$$

et
a est donné par la formule :

$$a = ((P_{lue2} - P_{cal2}) - b) / (P_{lue2} - P_{lue1}).$$

b correspond au décalage initial de la course réelle de l'actionneur et de la course théorique d'un actionneur idéal, alors que a correspond à la différence de pente entre la pente caractéristique de l'actionneur et la pente théorique d'un actionneur idéal.

A l'étape 112, la fonction affine calculée permettant de déterminer une valeur corrigée de la position courante de l'actionneur à partir de la valeur brute de mesure fournie par le transducteur est mémorisée dans la mémoire 48.

L'actionneur calibré est ensuite démonté du mannequin et est envoyé pour être monté sur un siège.

Un tel algorithme de calibrage à partir de deux valeurs relevées est mis en oeuvre pour chaque actionneur de la famille.

On conçoit ainsi que pour les deux positions de référence identifiées, tous les actionneurs de la famille d'actionneurs fournissent, en sortie de l'unité de correction 46, la même valeur corrigée représentative de la position de l'actionneur. Ces valeurs corrigées fournies par l'actionneur sont indépendantes des tolérances et des jeux mécaniques résultant de la fabrication de l'actionneur, ainsi que des imprécisions mécaniques et électroniques des transducteurs.

Lors de son utilisation, l'actionneur est tel que, à chaque instant, une valeur brute de mesure est fournie à l'unité de traitement d'informations 47, laquelle détermine, à partir de l'algorithme stocké dans la mémoire 48, et notamment à partir de la fonction affine de correction propre à l'actionneur, une valeur corrigée.

Grâce au calibrage indépendant de chaque actionneur, quelles que soient les imprécisions mécaniques et électriques de l'actionneur, des valeurs corrigées très proches sont obtenues pour une même position de chacun des actionneurs de la même famille.

Plus précisément, l'algorithme de correction de chaque actionneur est tel que l'écart entre les valeurs corrigées fournies par les actionneurs d'une même famille pour tout ensemble de positions identiques des actionneurs est inférieur à l'écart entre les valeurs brutes de mesure fournies par les transducteurs des mêmes actionneurs pour le même ensemble de positions identiques des actionneurs.

Après montage de l'actionneur sur le siège, l'unité de commande 28 est adaptée pour mettre en oeuvre un ensemble d'algorithmes de commande de chaque actionneur afin, soit de déplacer un élément de siège suite à une commande directe de l'utilisateur, soit de déplacer cet élément de siège jusqu'à une position cible prédéterminée associée à une configuration prédéterminée du siège requise par l'utilisateur.

Des tests sont effectués en continu pour scruter l'enfoncement d'une touche du clavier 26 correspondant à une commande directe d'un élément de siège ou à une commande du siège vers une configuration prédéterminée.

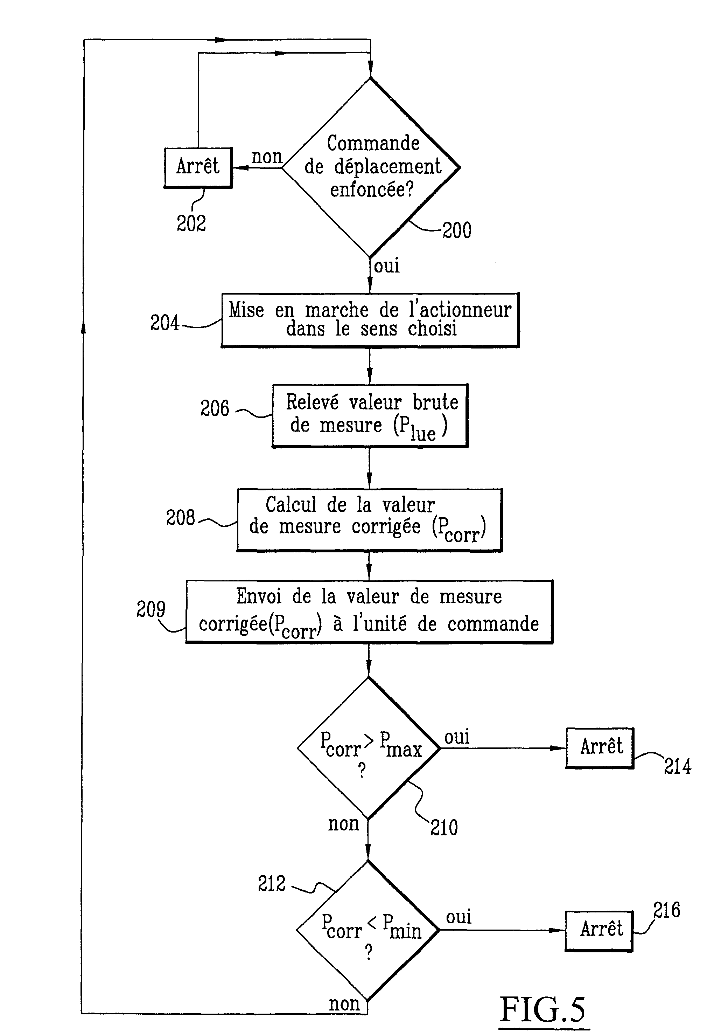

Sur la figure 5 est illustré l'algorithme permettant le déplacement d'un actionneur, par exemple l'actionneur 24 agissant sur le repose-jambes 20.

Le test est mis en oeuvre à l'étape 200 détermine si la touche propre à la commande directe de l'actionneur en cause a été enfoncée dans un sens ou dans un autre. Si tel n'est pas le cas, l'actionneur est maintenu à l'arrêt à l'étape 202 ou l'actionneur est arrêté si celui-ci est en mouvement.

Si, à l'étape 200, l'enfoncement d'une commande de déplacement est détecté, l'actionneur correspondant est mis en marche dans le sens choisi, à l'étape 204.

A l'étape 206, un relevé de la valeur brute de mesure $P_{lue}$ est effectué par l'unité de correction 46. Cette valeur brute correspond à la valeur de la résistance du potentiomètre installé sur l'actionneur considéré.

A l'étape 208, une valeur de mesure corrigée $P_{corr}$ est calculée par les moyens de traitement d'informations 47 à partir de la valeur brute de mesure relevée et de la fonction affine de correction stockée dans la mémoire 48. Cette valeur corrigée est adressée à l'unité de commande 28, à l'étape 209.

Aux étapes 210 et 212, la valeur de mesure corrigée $P_{corr}$ est comparée, par les moyens de pilotage 30, aux valeurs limites de déplacement de l'actionneur, notées $P_{max}$ et $P_{min}$.

Si la valeur de mesure corrigée $P_{corr}$ est supérieure à la valeur $P_{max}$ ou inférieure à la valeur $P_{min}$, l'arrêt de l'actionneur est commandé à l'une des étapes 214 et 216. En effet, si l'un des tests effectués aux étapes 210 et 212 est vérifié, l'actionneur est en bout de course et celui-ci doit être arrêté.

A l'issue de l'étape de test 212, l'étape 200 est à nouveau mise en oeuvre afin d'assurer un déroulement en boucle de la succession d'étapes décrites précédemment.

On conçoit qu'avec la mise en oeuvre d'un tel algorithme, les tests conduits aux étapes 210 et 212 étant effectués non pas sur les valeurs brutes de mesures $P_{lue}$ mais sur les valeurs de mesure corrigées $P_{corr}$, la mise en oeuvre de l'algorithme ne dépend pas des tolérances de fabrication de l'actionneur, ni des imprécisions du transducteur intégré à l'actionneur. En effet, l'influence de ces tolérances et imprécisions est supprimée du fait du calibrage préalable de l'actionneur, ce calibrage permettant d'effectuer des tests sur des valeurs correspondant à des valeurs théoriques qui auraient été rencontrées avec un actionneur idéal.

Dans l'exemple décrit précédemment, la fonction affine de correction de chaque actionneur est déterminée à partir de seulement deux points.

En variante, elle est calculée à partir de plus de deux points par exemple par un algorithme des moindres carrés.

De plus, l'algorithme illustré sur la figure 5 est adapté pour permettre la comparaison des valeurs du courant consommé par chacun des actionneurs avec des valeurs de seuils prédéterminés et pour commander l'arrêt de chaque actionneur si la valeur de seuil prédéterminé associé est dépassée. De plus, avantageusement, l'unité de commande comporte des moyens de calcul du temps cumulé de fonctionnement de l'actionneur depuis l'implantation de l'actionneur sur le siège, ainsi que des moyens de comptage de son nombre de mises en marche depuis son montage sur le siège.

On conçoit qu'avec des actionneurs ainsi calibrés avant leur montage afin de fournir tous sensiblement une même valeur de mesure corrigée pour une même position, le remplacement d'un actionneur défectueux sur un siège par un actionneur de la même famille peut être effectué sans qu'il soit nécessaire de modifier la programmation du siège, et notamment de l'unité de commande 28. Après un tel remplacement, les positions réelles obtenues lors de la commande d'un actionneur de remplacement sont rigoureusement identiques à celles obtenues avec l'actionneur d'origine.

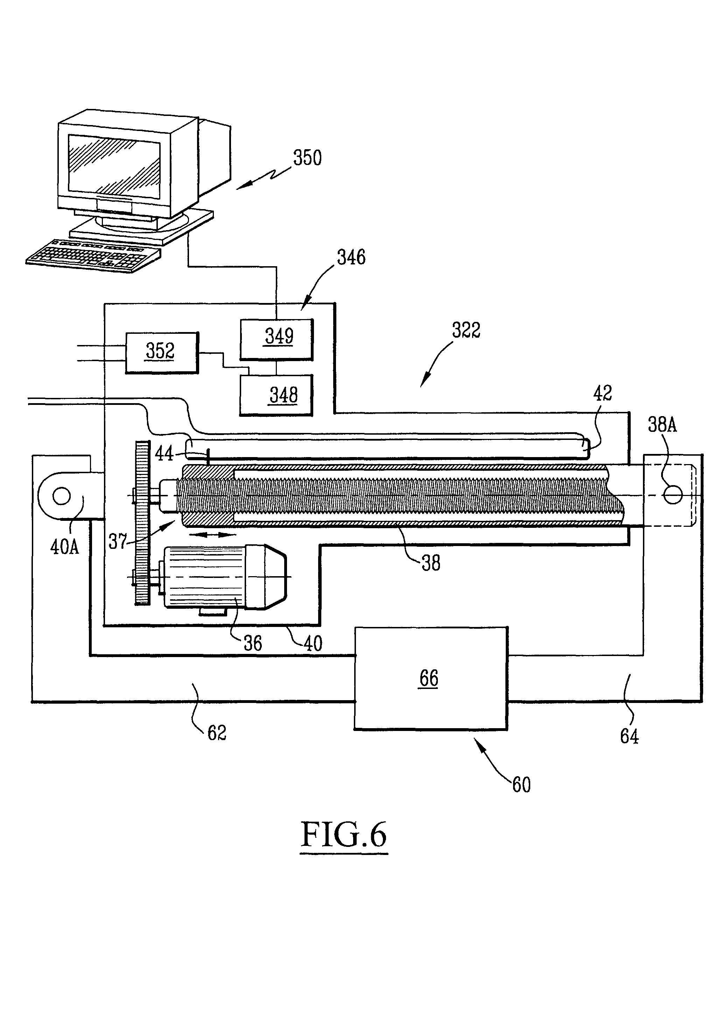

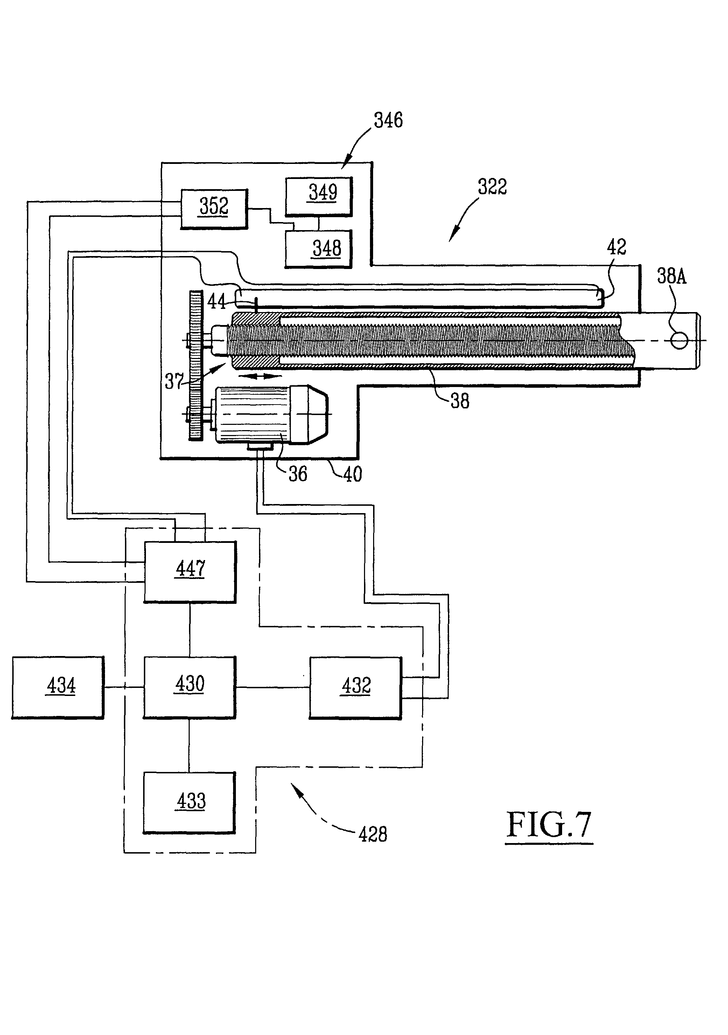

Sur les figures 6 et 7 est représentée une variante de réalisation d'un actionneur 122 selon l'invention.

Sur ces figures, les éléments identiques ou analogues à ceux mis en oeuvre dans le mode de réalisation précédent sont désignés par les mêmes numéros de référence.

Dans ce mode de réalisation, l'actionneur noté 322 comporte comme précédemment des moyens de correction 346 adaptés pour définir un algorithme de correction propre audit actionneur. Ces moyens de correction 346 comportent des moyens de mémorisation 348 adaptés pour stocker des paramètres de définition de l'algorithme de correction. Ils comportent en outre une interface de communication 349 adaptée pour assurer la liaison temporaire des moyens de mémorisation 348 à des moyens de calibrage 350 constitués par exemple d'un ordinateur.

Les moyens de calibrage 350 sont adaptés pour charger dans les moyens de mémorisation 348 des paramètres définissant l'algorithme de correction. Ces paramètres sont propres à l'actionneur considéré. Ces paramètres sont par exemple constitués des paramètres a, b et $P_{cal1}$ nécessaires pour définir la formule de correction : $P_{corr} = P_{lue} - \{a(P_{lue} - P_{cal1}) + b\}$.

En outre, les moyens de correction 346 comportent des moyens 352 de transmission de paramètres de définition contenus dans les moyens de mémorisation 348 vers une unité de commande 428 telle que représentée sur la figure 7.

Pour le calibrage de l'actionneur 322, celui-ci est comme dans le mode de réalisation précédent placé dans un mannequin 60 permettant d'amener l'actionneur dans deux positions distinctes. Les moyens de calibrage 350 sont adaptés pour, à partir des valeurs brutes de mesure de référence relevée $P_{lue1}$ et $P_{lue2}$ et des valeurs théoriques de référence $P_{cal1}$ et $P_{cal2}$, définir les paramètres de définition de l'algorithme de correction a, $P_{cal1}$ et b et pour mémoriser ses paramètres dans les moyens de mémorisation 348.

Cette phase de calibrage est effectuée avant que l'actionneur ne soit monté sur le siège.

Sur la figure 7 est représenté un système d'actionnement comportant un actionneur 322 ayant été préalablement calibré. Cet actionneur est relié à une unité de commande 428. Cette unité de commande comporte, comme dans le mode de réalisation illustré sur la figure 1, des moyens de pilotage 430 reliés à une unité d'alimentation 432 à laquelle est relié le moteur 36 de l'actionneur. En outre, l'unité de commande 428 comporte une mémoire 433 reliée aux moyens de pilotage 430. Ces moyens de pilotage 430 sont adaptés pour être reliés à un clavier de commande 434.

En outre, dans ce mode de réalisation, l'unité de commande 428 comporte une unité de traitement d'informations 447 reliée aux moyens de pilotage 430. L'unité de traitement d'informations 447 est en outre reliée aux moyens de transmission 352 de l'actionneur et au transducteur 42 de l'actionneur afin de recevoir des valeurs brutes de mesure $P_{lue}$.

L'unité de traitement d'informations 447 est adaptée pour définir pour chaque valeur brute de mesure reçue $P_{lue}$, une valeur corrigée $P_{corr}$ de la position courante de l'actionneur par mise en oeuvre de l'algorithme de correction, cet algorithme étant défini à partir des paramètres de définition a, b, $P_{cal1}$ reçus des moyens de correction 346 de l'actionneur.

A partir des valeurs corrigées de la position de l'actionneur, les moyens de pilotage 430 assurent la commande de l'actionneur comme exposé en regard du mode de réalisation précédent.

Dans ce mode de réalisation également, on comprend que l'actionneur comportant des moyens propres de correction 346 permettant de corriger les valeurs brutes de mesure $P_{lue}$ en valeur corrigée par de la position de l'actionneur, un actionneur 322 peut être remplacé par un autre actionneur de la même famille, sans qu'il soit nécessaire de procéder à un réglage de l'unité de commande 428.

## Revendications

1. Actionneur (22, 24 ; 322) pour un siège, du type comprenant, d'une part, un corps (40) et un organe de commande (38) mobile par rapport au corps (40), sous la commande d'un moteur d'actionnement (36) et, d'autre part, un transducteur (42) disposé entre le corps (40) et l'organe de commande (38), ledit transducteur (42) étant adapté pour fournir une valeur brute de mesure ($P_{lue}$) représentative de la position courante de l'organe de commande (38) par rapport au corps (40), **caractérisé en ce qu'**il comporte des moyens (46 ; 346) de correction de ladite valeur brute de mesure ($P_{lue}$), lesdits moyens de correction (46 ; 346) étant adaptés pour définir un algorithme de correction propre audit actionneur (22, 25; 322) et adapté pour fournir une valeur corrigée ($P_{corr}$) de la position courante de l'actionneur à partir de ladite valeur brute de mesure ($P_{lue}$) et **en ce que** lesdits moyens de correction (46 ; 346) sont propres audit actionneur et sont intégrés à celui-ci.

2. Actionneur selon la revendication 1, **caractérisé en ce que** lesdits moyens de correction comportent une unité de correction (46) propre audit actionneur et intégrée dans ledit actionneur, laquelle unité de correction (46) comporte des moyens (48) de stockage dudit algorithme de correction lors de la fabrication de l'actionneur et une unité de traitement d'informations (47) adaptée pour fournir ladite valeur corrigée ($P_{corr}$) par mise en oeuvre de l'algorithme de correction mémorisé à partir de ladite valeur brute de mesure ($P_{lue}$).

3. Actionneur selon la revendication 1, **caractérisé en ce que** lesdits moyens de correction (346) comportent des moyens (348) de stockage de paramètres de définition dudit algorithme de correction et des moyens (352) de transmission desdits paramètres de définition vers une unité (428) de commande de l'actionneur (22, 24 ; 322) propre à mettre en oeuvre l'algorithme de correction sur la base desdits paramètres de définition.

4. Actionneur selon l'une quelconque des revendications précédentes, **caractérisé en ce qu'**il est isolé d'un siège, avant montage sur le siège.

5. Actionneur selon l'une quelconque des revendications précédentes, **caractérisé en ce que** ledit algorithme de correction dépend seulement des caractéristiques structurelles propres audit actionneur et est indépendant de la structure du siège auquel il est destiné.

6. Actionneur selon l'une quelconque des revendications précédentes, **caractérisé en ce que** ledit algorithme de correction est adapté pour calculer la valeur corrigée ($P_{corr}$) comme l'image de la valeur brute de mesure ($P_{lue}$) par une fonction affine de correction.

7. Système d'actionnement pour un siège, **caractérisé en ce qu'**il comporte au moins un actionneur (322) selon la revendication 3 et éventuellement l'une quelconque des revendications 4 à 6 et une unité (428) de commande du ou de chaque actionneur (322), laquelle unité de commande (428) est reliée au ou chaque actionneur (322) pour recevoir du ou de chaque actionneur la valeur brute de mesure ($P_{lue}$) et lesdits paramètres de définition de l'algorithme, et **en ce que** l'unité de commande (428) comporte une unité de traitement d'informations (447) adaptée pour fournir à partir de ladite valeur brute de mesure reçue ($P_{lue}$), ladite valeur corrigée ($P_{corr}$), par mise en oeuvre de l'algorithme de correction sur la base desdits paramètres de définition de l'algorithme reçus.

8. Famille d'actionneurs, **caractérisée en ce qu'**elle comporte plusieurs actionneurs selon l'une quelconque des revendications précédentes, et **en ce que** l'algorithme de correction de chaque actionneur est tel que, pour au moins une position relative prédéterminée de l'organe de commande (38) par rapport au corps (40), lesdites valeurs corrigées ($P_{corr}$) fournies par tous les actionneurs de la famille sont égales à une même valeur prédéterminée.

9. Famille d'actionneurs selon la revendication 8, **caractérisée en ce que** l'algorithme de correction de chaque actionneur est tel que, pour au moins deux positions relatives prédéterminées de l'organe de commande (38) par rapport au corps (40), lesdites valeurs corrigées ($P_{corr}$) fournies par tous les actionneurs de la famille sont égales à une même valeur prédéterminée.

10. Famille d'actionneurs selon la revendication 8 ou 9, **caractérisée en ce que** l'algorithme de correction propre à chaque actionneur est tel que l'écart entre les valeurs corrigées ($P_{corr}$) fournies par les actionneurs de la famille, pour tout ensemble de positions identiques des actionneurs est inférieur à l'écart entre les valeurs brutes de mesure ($P_{lue}$) fournies par les transducteurs des mêmes actionneurs pour le même ensemble de positions identiques des actionneurs.

11. Procédé de fabrication d'un actionneur (22 ; 24) destiné à être monté dans un siège, l'actionneur comprenant, d'une part, un corps (40) et un organe de commande (38) mobile par rapport au corps (40), sous la commande d'un moteur d'actionnement (36) et, d'autre part, un transducteur (42) disposé entre le corps (40) et l'organe de commande (38), ledit transducteur (42) étant adapté pour fournir une valeur brute de mesure (P$_{lue}$) représentative de la position courante de l'organe de commande (38) par rapport au corps (40), **caractérisé en ce que** l'on intègre à l'actionneur des moyens de correction de ladite valeur brute de mesure, lesdits moyens de correction étant adaptés pour définir un algorithme de correction propre audit actionneur et adapté pour fournir une valeur corrigée (P$_{corr}$) de la position courante de l'actionneur à partir de ladite valeur brute de mesure (P$_{lue}$), et **en ce qu'**il comporte une phase de personnalisation, en fonction de l'actionneur, de l'algorithme de correction défini par lesdits moyens de correction, avant montage de l'actionneur (22 ; 24) sur le siège.

12. Procédé selon la revendication 11, **caractérisé en ce que** ladite phase de personnalisation de l'algorithme de correction comprend les étapes de :

- positionnement de l'organe de commande (38) par rapport au corps dans au moins une position prédéterminée ;
- lecture de la valeur brute de mesure (P$_{lue1}$, P$_{lue2}$), fournie par le transducteur pour la ou chaque position prédéterminée ; et
- détermination de l'algorithme de correction à partir de la ou chaque valeur brute de mesure lue (P$_{lue1}$, P$_{lue2}$).

**Patentansprüche**

1. Betätigungsglied (22, 24; 322) für einen Sitz, welches von dem Typ ist, der einerseits einen Körper (40) und ein Stellorgan (38), welches bezüglich des Körpers (40) unter der Steuerung eines Motorantriebs (36) beweglich ist, und andererseits einen Messwertaufnehmer (42) aufweist, der zwischen dem Körper (40) und dem Stellorgan (38) angeordnet ist, wobei der Messwertaufnehmer (42) zum Liefern eines Roh-Messwertes (P$_{lue}$) eingerichtet ist, welcher die laufende Position des Stellorgans (38) bezüglich des Körpers (40) repräsentiert, **dadurch gekennzeichnet, dass** es Mittel (46; 346) zur Korrektur des Roh-Messwertes (P$_{lue}$) aufweist, wobei die Korrekturmittel (46; 346) eingerichtet sind zum Definieren eines dem Betätigungsglied (22, 25; 322) zugehörigen Korrekturalgorithmus, der eingerichtet ist zum Liefern eines Korrekturwerts (P$_{corr}$) der laufende Position des Betätigungsgliedes ausgehend von dem Roh-Messwert (P$_{lue}$), und dass die Korrekturmittel (46; 346) dem Betätigungsglied zugehörig sind und in dieses integriert sind.

2. Betätigungsglied gemäß Anspruch 1, **dadurch gekennzeichnet, dass** die Korrekturmittel eine Korrektureinheit (46) aufweisen, welche dem Betätigungsglied zugehörig ist und in das Betätigungsglied integriert ist, welche Korrektureinheit (46) Mittel (48) zum Speichern des Korrekturalgorithmus bei der Herstellung des Betätigungsglieds und eine Informationsverarbeitungs-Einheit (47) aufweist, die zum Liefern des Korrekturwertes (P$_{corr}$) eingerichtet ist durch Durchführen des gespeicherten Korrekturalgorithmus ausgehend von dem Roh-Messwert (P$_{lue}$).

3. Betätigungsglied gemäß Anspruch 1, **dadurch gekennzeichnet, dass** die Korrekturmittel (346) Mittel (348) zum Speichern von Parametern zur Definition des Korrekturalgorithmus und Mittel (352) zum Übertragen der Definitionsparameter zu einer Steuereinheit (428) des Betätigungsgliedes (22, 24; 322) aufweisen, um den Korrekturalgorithmus auf der Basis der Definitionsparameter durchzuführen.

4. Betätigungsglied gemäß einem der vorhergehenden Ansprüche, **dadurch gekennzeichnet, dass** es vor der Montage an einem Sitz von dem Sitz isoliert ist.

5. Betätigungsglied gemäß einem der vorhergehenden Ansprüche, **dadurch gekennzeichnet, dass** der Korrekturalgorithmus nur von den strukturellen Eigenschaften abhängig ist, die dem Betätigungsglied zugehörig sind, und unabhängig von der Struktur des Sitzes ist, für welchen es bestimmt ist.

6. Betätigungsglied gemäß einem der vorhergehenden Ansprüche, **dadurch gekennzeichnet, dass** der Korrekturalgorithmus eingerichtet ist zum Berechnen des Korrekturwertes (P$_{corr}$) als Abbild des Roh-Messwertes (P$_{lue}$) durch eine affine Korrekturfunktion.

7. Betätigungssystem für einen Sitz, **dadurch gekennzeichnet, dass** es wenigstens ein Betätigungsglied (322) gemäß dem Anspruch 3 und eventuell einem der Ansprüche 4 bis 6 und eine Einheit (428) zum Steuern von dem oder von jedem Betätigungsglied (322) aufweist, welche Steuereinheit (428) mit dem oder mit jedem Betätigungsglied (322) verbunden ist, um von dem oder von jedem Betätigungsglied den Roh-Messwert (P$_{lue}$) und die Definitionsparameter des Algorithmus aufzunehmen, und dass die Steuereinheit (428) eine Informationsverarbeitungs-Einheit (447) aufweist, die eingerichtet ist, um ausgehend von dem empfangenen Roh-Messwert (P$_{lue}$) den Korrekturwert (P$_{corr}$) zu liefern durch Durchführung des Korrekturalgorithmus auf der Basis der empfangenen Definitionsparameter des Algorithmus.

8. Familie von Betätigungsgliedern, **dadurch ge-**

**kennzeichnet, dass** sie mehrere Betätigungsglieder gemäß einem der vorhergehenden Ansprüche hat und dass der Korrekturalgorithmus von jedem Betätigungsglied derartig ist, dass für wenigstens eine vorbestimmte Relativposition des Stellorgans (38) bezüglich des Körpers (40) die Korrekturwerte ($P_{corr}$), die von jedem der Betätigungsglieder der Familie geliefert werden, zu einem gleichen, vorbestimmten Wert gleich sind.

9. Familie von Betätigungsgliedern gemäß Anspruch 8, **dadurch gekennzeichnet, dass** der Korrekturalgorithmus jedes Betätigungsgliedes derartig ist, dass für mindestens zwei vorbestimmte Relativpositionen des Stellorgans (38) bezüglich des Körpers (40), die Korrekturwerte ($P_{corr}$), die von jedem der Betätigungsglieder der Familie geliefert werden, zu einem gleichen, vorbestimmten Wert gleich sind.

10. Familie von Betätigungsgliedern gemäß Anspruch 8 oder 9, **dadurch gekennzeichnet, dass** der Korrekturalgorithmus, der jedem Betätigungsglied zugehörig ist, derartig ist, dass die Abweichung zwischen den Korrekturwerten ($P_{corr}$), die von den Betätigungsgliedern der Familie geliefert werden, für jede Anordnung von identischen Positionen der Betätigungsglieder niedriger als die Abweichung zwischen den Roh-Messwerten ($P_{lue}$) ist, die von den Messwertaufnehmern der gleichen Betätigungsglieder für die gleiche Anordnung von identischen Positionen der Betätigungsglieder geliefert werden.

11. Verfahren zur Herstellung eines Betätigungsgliedes (22; 24), welches zur Montage in einem Sitz bestimmt ist, wobei das Betätigungsglied einerseits einen Körper (40) und ein Stellorgan (38), welches bezüglich des Körpers (40) unter der Steuerung eines Motorantriebs (36) beweglich ist, und andererseits einen Messwertaufnehmer (42) aufweist, der zwischen dem Körper (40) und dem Stellorgan (38) angeordnet ist, wobei der Messwertaufnehmer (42) zum Liefern eines Roh-Messwertes ($P_{lue}$) eingerichtet ist, der die laufende Position des Stellorgans (38) bezüglich des Körpers (40) repräsentiert, **dadurch gekennzeichnet, dass** in das Betätigungsglied Mittel zur Korrektur des Roh-Messwerts integriert werden, wobei die Korrekturmittel eingerichtet sind zum Definieren eines dem Betätigungsglied zugehörigen Korrekturalgorithmus, der zum Liefern eines Korrekturwerts ($P_{corr}$) der laufenden Position des Betätigungsgliedes eingerichtet ist ausgehend von dem Roh-Messwert ($P_{lue}$), und dass es entsprechend dem Betätigungsglied eine Personalisierungsphase des Korrekturalgorithmus aufweist, der von den Korrekturmitteln definiert ist, vor der Montage des Betätigungsgliedes (22; 24) an dem Sitz.

12. Verfahren gemäß Anspruch 11, **dadurch gekennzeichnet, dass** die Korrekturalgorithmus-Personalisierungsphase die Schritte aufweist:

- Positionieren des Stellorgans (38) bezüglich des Körpers in mindestens einer vorbestimmten Position;
- Lesen des Roh-Messwertes ($P_{lue1}$, $P_{lue2}$), der von dem Messwertaufnehmer für die oder jede vorbestimmte Position geliefert wird, und
- Bestimmen des Korrekturalgorithmus ausgehend von dem oder jedem gelesenen Roh-Messwert ($P_{lue1}$, $P_{lue2}$).

**Claims**

1. Actuator (22, 24; 322) for a seat, of the type comprising, on the one hand, a body (40) and a control element (38) movable relative to the body (40), under the control of an actuating motor (36), and, on the other hand, a transducer (42) arranged between the body (40) and the control element (38), the said transducer (42) being suitable for providing a raw measurement value ($P_{lue}$) representative of the current position of the control element (38) relative to the body (40), **characterised in that** it has means (46; 346) for correcting the said raw measurement value ($P_{lue}$), the said correction means (46; 346) being suitable for defining a correction algorithm which is specific to the said actuator (22, 25; 322) and which is suitable for providing a corrected value ($P_{corr}$) of the current position of the actuator on the basis of the said raw measurement value ($P_{lue}$), and **in that** the said correction means (46; 346) are specific to the said actuator and are integrated therein.

2. Actuator according to Claim 1, **characterised in that** the said correction means have a correction unit (46) specific to the said actuator and integrated in the said actuator, which correction unit (46) has means (48) for storing the said correction algorithm when the actuator is manufactured and a data processing unit (47) suitable for providing the said corrected value ($P_{corr}$) by implementing the stored correction algorithm on the basis of the said raw measurement value ($P_{lue}$).

3. Actuator according to Claim 1, **characterised in that** the said correction means (346) have means (348) for storing parameters for defining the said correction algorithm and means (352) for transmitting the said defining parameters to a control unit (428) of the actuator (22, 24; 322) capable of implementing the correction algorithm on the basis of the said defining parameters.

4. Actuator according to any one of the preceding claims, **characterised in that** it is isolated from a seat before being mounted on the seat.

5. Actuator according to any one of the preceding claims, **characterised in that** the said correction algorithm depends solely on the structural characteristics specific to the said actuator and is independent of the structure of the seat for which it is intended.

6. Actuator according to any one of the preceding claims, **characterised in that** the said correction algorithm is suitable for calculating the corrected value ($P_{corr}$) as the image of the raw measurement value ($P_{lue}$) by means of an affine correction function.

7. Actuating system for a seat, **characterised in that** it has at least one actuator (322) according to Claim 3 and if appropriate any one of Claims 4 to 6, and a control unit (428) of the or each actuator (322), which control unit (428) is linked to the or each actuator (322) so as to receive from the or each actuator the raw measurement value ($P_{lue}$) and the said parameters for defining the algorithm, and **in that** the control unit (428) has a data processing unit (447) suitable for providing the said corrected value ($P_{corr}$) on the basis of the said received raw measurement value ($P_{lue}$) by implementing the correction algorithm on the basis of the said received parameters for defining the algorithm.

8. Family of actuators, **characterised in that** it has a plurality of actuators according to any one of the preceding claims, and **in that** the correction algorithm of each actuator is such that, for at least one predetermined relative position of the control element (38) with respect to the body (40), the said corrected values ($P_{corr}$) provided by all the actuators of the family are equal to a same predetermined value.

9. Family of actuators according to Claim 8, **characterised in that** the correction algorithm of each actuator is such that, for at least two predetermined relative positions of the control element (38) with respect to the body (40), the said corrected values ($P_{corr}$) provided by all the actuators of the family are equal to a same predetermined value.

10. Family of actuators according to Claim 8 or 9, **characterised in that** the correction algorithm specific to each actuator is such that the difference between the corrected values ($P_{corr}$) provided by the actuators of the family for any set of identical positions of the actuators is smaller than the difference between the raw measurement values ($P_{lue}$) provided by the transducers of the same actuators for the same set of identical positions of the actuators.

11. Method of manufacturing an actuator (22; 24) intended for mounting in a seat, the actuator comprising, on the one hand, a body (40) and a control element (38) movable relative to the body (40), under the control of an actuating motor (36), and, on the other hand, a transducer (42) arranged between the body (40) and the control element (38), the said transducer (42) being suitable for providing a raw measurement value ($P_{lue}$) representative of the current position of the control element (38) relative to the body (40), **characterised in that** means for correcting the said raw measurement value are integrated in the actuator, the said correction means being suitable for defining a correction algorithm which is specific to the said actuator and which is suitable for providing a corrected value ($P_{corr}$) of the current position of the actuator on the basis of the said raw measurement value ($P_{lue}$), and **in that** it includes a phase during which the correction algorithm defined by the said correction means is customised for the specific actuator before the actuator (22; 24) is mounted on the seat.

12. Method according to Claim 11, **characterised in that** the said phase of customising the correction algorithm comprises the steps of:

- positioning the control element (38) relative to the body in at least one predetermined position;
- reading the raw measurement value ($P_{lue}$, $P_{lue2}$) provided by the transducer for the or each predetermined position; and
- determining the correction algorithm on the basis of the or each raw measurement value ($P_{lue1}$, $P_{lue2}$) read.

FIG.1

Début

100 — Mise en place de l'actionneur dans une première position de référence identifiée

102 — Relevé d'une première valeur brute de mesure ($P_{lue1}$) de référence

104 — Mise en place de l'actionneur dans une deuxième position de référence identifiée

106 — Relevé d'une deuxième valeur brute de mesure ($P_{lue2}$) de référence

108 — Définition des valeurs théoriques de référence ($P_{cal1}$, $P_{cal2}$) associées aux positions de référence identifiées de l'actionneur

110 — Détermination de la fonction affine de correction

112 — Mémorisation de la fonction affine de correction

Fin

FIG.3

FIG.2

FIG.4

Commande
de déplacement
enfoncée? — 200

Arrêt ← non — 202

oui

Mise en marche de l'actionneur
dans le sens choisi — 204

Relevé valeur brute
de mesure ($P_{lue}$) — 206

Calcul de la valeur
de mesure corrigée ($P_{corr}$) — 208

Envoi de la valeur de mesure
corrigée($P_{corr}$) à l'unité de commande — 209

$P_{corr} > P_{max}$
? — 210
oui → Arrêt — 214

non

$P_{corr} < P_{min}$
? — 212
oui → Arrêt — 216

non

## FIG.5

FIG.6

FIG.7